# EUROPEAN PATENT SPECIFICATION

(11) **EP 3 409 730 B1**
(45) Date of publication and mention of the grant of the patent: **12.02.2020**
(21) Application number: 17750186.3
(22) Date of filing: 03.02.2017
(51) Int. Cl.: C08L 101/10, C08K 5/34, C09J 11/06, C09J 133/06, C09J 171/02, C09J 183/12, C09J 201/10, C08K 5/3415, B27N 3/06

(54) **CURABLE COMPOSITION HAVING IMPROVED WATER-RESISTANT ADHESIVENESS**
HÄRTBARE ZUSAMMENSETZUNG MIT VERBESSERTER WASSERBESTÄNDIGER KLEBRIGKEIT
COMPOSITION DURCISSABLE PRÉSENTANT UNE ADHÉSIVITÉ AMÉLIORÉE RÉSISTANTE À L'EAU

(30) Priority: 08.02.2016 JP 2016022070; 03.06.2016 JP 2016111680
(43) Date of publication of application: 05.12.2018
(73) Proprietor: Kaneka Corporation, Osaka-shi, Osaka 530-8288 (JP)
(72) Inventor: ITANO, Yu, Takasago-shi Hyogo 676-8688 (JP); SMITS, Wendy, Westerlo-Oevel B2260 (BE)
(74) Representative: Vossius & Partner Patentanwälte Rechtsanwälte mbB
(86) International application number: PCT/JP2017/004090
(87) International publication number: WO 2017/138463

(56) References cited:
- EP-A1- 1 818 368
- WO-A1-2015/080067
- WO-A1-2015/111577
- JP-A- 2008 308 521
- JP-A- 2010 509 483
- JP-A- 2014 208 787
- JP-A- 2014 234 396
- JP-A- 2015 124 342
- JP-A- 2015 218 310
- US-A1- 2017 044 302

## Description

### TECHNICAL FIELD

The present invention relates to a curable composition containing an organic polymer having a silicon group (hereinbelow to be also referred to as "reactive silicon group") which has a hydroxyl group or a hydrolyzable group on a silicon atom, and can form a siloxane bond.

### BACKGROUND ART

An organic polymer containing at least one reactive silicon groups in a molecule undergoes, even at room temperature, hydrolysis of a silyl group due to moisture and the like, and also forms a siloxane bond according to a condensation reaction. It is known that the organic polymer can yield a rubbery cured product as a result. Since an isocyanate compound, an acryl monomer, or an epoxy compound of which noxious property has been indicated is not used for the reaction, use of the organic polymer recently receives attention as an environmentally suitable technique that is reduced in burden on the environment or human body. Under these circumstances, a broadened application range of the organic polymer is expected.

For example, a polyoxyalkylene polymer containing reactive silicon groups is widely used for applications such as a sealing material, an adhesive, and paint. There are various kinds of an adherend base material which becomes a subject. However, among them, a porous base material such as concrete or wood is known as a hardly adhesive base material and a decrease in adhesiveness after a water resistance test is often described as a problem, in particular.

In Patent Document 1, it is disclosed that the water-resistant adhesiveness can be improved by using a binding product of kaolinite and quartz.

Patent Document 1: PCT International Publication No. WO2015/111577

### DISCLOSURE OF THE INVENTION

### Problems to be Solved by the Invention

According to Standard EN204 for wood adhesives in Europe, there is D4 class in which high water-resistant adhesiveness is required, and thus it is desired to have a further improvement of water-resistant adhesiveness.

### Means for Solving the Problems

The inventors of the present invention conducted studies to have a further improvement of water-resistant adhesiveness, and completed the following inventions accordingly.

Namely, the present invention relates to the followings.
(1) A curable composition comprising an organic polymer (A) having a reactive silicon group and a cyclic N-hydroamide compound (B),
   wherein the cyclic N-hydroamide compound (B) is 2-pyrrolidinone shown below, wherein a main chain of the organic polymer (A) is a polyoxyalkylene-based polymer (A1) a (meth)acrylic acid ester-based polymer (A2) or a polyoxyalkylene-based polymer (A1) and a (meth)acrylic acid ester-based polymer (A2) in combination, wherein the blending amount of the cyclic N-hydroamide compound (B) is, relative to 100 parts by weight of the organic polymer (A), 1 to 5 parts by weight.
(2) The curable composition according to (1), wherein the organic polymer (A1) is an organic polymer which has two or more reactive silicon groups at one terminal site. 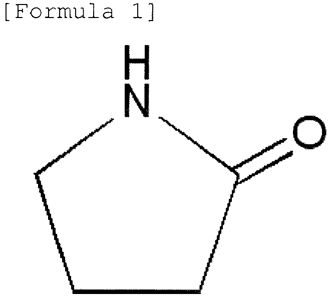
(3) An adhesive composition comprising the curable composition according to any one of (1) to (2).
(4) A cured product obtained by curing the curable composition according to (1) or (2).
(5) An adhered structure comprising an adherend, an adhesion layer, and wood,
   wherein the adhesion layer is composed of the cured product according to (4), and
   the adhesion layer is present between the adherend and wood and also in contact with the adherend and wood.

### Effects of the Invention

The curable composition of the present invention can give a cured product having high initial strength and has favorable adhesiveness even after a water resistance test.

### PREFERRED MODE FOR CARRYING OUT THE INVENTION

Hereinbelow, the present invention is described in detail.

### <<Curable composition>>

The curable composition contains an organic polymer (A) containing reactive silicon groups and a cyclic N-hydroamide compound (B) as claimed in claim 1. Hereinbelow, descriptions are given for the essential or optional components that are contained in the curable composition.

### <Organic polymer (A) containing reactive silicon groups>

The organic polymer (A) containing reactive silicon groups (hereinbelow to be also referred to as "organic polymer (A)") to be contained in the curable composition is not particularly limited. As for the main chain skeleton of the polymer, an organic polymer such as oxyalkylene-based polymer, (meth)acrylic acid ester-based polymer, or a combination thereof can be used. Of these, an oxyalkylene-based polymer is particularly preferable from the viewpoint of having good low temperature property, flexibility, and compatibility to other components. In the following descriptions relating to the organic polymer (A), an organic polymer which has an oxyalkylene-based polymer as a main chain skeleton is described as a representative example.

The polyoxyalkylene-based polymer containing reactive silicon groups have a reactive silicon group represented by the following general formula (1).

-SiR¹ₐX₃₋ₐ (1)

(in the formula, R¹ represents a substituted or unsubstituted hydrocarbon group having 1 to 20 carbon atoms. X each independently represents a hydroxyl group or a hydrolyzable group. a represents 0 or 1.)

Specific examples of R¹ in the general formula (1) include an alkyl group such as methyl group or ethyl group; a cycloalkyl group such as cyclohexyl group; an aryl group such as phenyl group; an aralkyl group such as benzyl group or a triorganosiloxy group represented by -OSi(R')3 in which R' is a methyl group, a phenyl group, or the like; a fluoroalkyl group such as fluoromethyl group or difluoromethyl group; a chloroalkyl group such as chloromethyl group or 1-chloroethyl group; an alkoxyalkyl group such as methoxymethyl group, ethoxymethyl group, phenoxymethyl group, or 1-methoxyethyl group; an aminoalkyl group such as aminomethyl group, N-methylaminomethyl group, or N,N-dimethylaminomethyl group; an acetoxymethyl group, a methylcarbamate group, and a 2-cyanoethyl group. From the viewpoint of the availability of raw materials, a methyl group is more preferable among them.

As for the hydrolyzable group represented by X in the general formula (1), a known hydrolyzable group can be mentioned. Specific examples of the hydrolyzable group include a hydrogen, a halogen, an alkoxy group, an alkenyloxy group, an aryloxy group, an acyloxy group, a ketoximate group, an amino group, an amide group, an acid amide group, an aminooxy group, and a mercapto group. Among them, due to high activity, a halogen, an alkoxy group, an alkenyloxy group, and an acyloxy group are preferable, and from the viewpoint of easy handlability by having mild hydrolyzability, an alkoxy group such as methoxy group or ethoxy group is more preferable, and a methoxy group and an ethoxy group are particularly preferable. Furthermore, in the case of an ethoxy group or an isopropenoxy group, the compound which is released according to the hydrolysis is ethanol and acetone, respectively, and they are preferable from the viewpoint of the safety.

Specific examples of the reactive silicon group represented by the general formula (1) include a trimethoxysilyl group, a triethoxysilyl group, a tris(2-propenyl oxy)silyl group, a triacetoxysilyl group, a dimethoxymethylsilyl group, a diethoxymethylsilyl group, a diisopropoxymethylsilyl group, a (chloromethyl)dimethoxysilyl group, a (methoxymethyl)dimethoxysilyl group, a (methoxymethyl)diethoxysilyl group, and an (ethoxymethyl)dimethoxysilyl group. Among them, a dimethoxymethylsilyl group and a trimethoxysilyl group are preferable in that a cured product with high strength can be obtained. The polyoxyalkylene-based polymer has relatively low glass transition temperature and a cured product obtained therefrom has excellent cold resistance. Furthermore, it has high moisture permeability, and when it is prepared as a one-liquid type composition, it has properties that excellent depth curability and also excellent adhesiveness can be obtained.

Specific examples thereof include a polyoxyalkylene-based polymer such as polyoxyethylene, polyoxypropylene, polyoxybutylene, polyoxytetramethylene, a polyoxyethylene-polyoxypropylene copolymer, or a polyoxypropylene-polyoxybutylene copolymer.

The main chain structure of the polyoxyalkylene-based polymer may be composed of only one kind of repeat unit, or two or more kinds of repeat units.

Particularly, when it is used for sealant, adhesive and the like, the organic polymer containing reactive silicon groups is preferably composed of a polyoxypropylene-based polymer containing 50% by weight or more, and preferably 80% by weight or more of the oxypropylene repeat unit in the polymer main chain structure from the viewpoint of having amorphous property and relatively low viscosity.

The main chain structure of the polymer may have, within a range in which the effects of the present invention are not impaired, a polymer structure other than the oxyalkylene structure.

The main chain structure of the polymer may be linear or have a branched chain. When a cured product with higher strength is desired, a branched chain polymer is preferable. When a cured product with higher elongation is desired, a linear polymer is preferable. When the polymer has a branched chain, the number of the branched chain bonded to the main chain is preferably 1 to 4, and most preferably 1.

As for the polyoxyalkylene-based polymer, the polymer obtained by ring opening polymerization reaction of a cyclic ether compound, by using a polymerization catalyst in the presence of an initiator, is preferable.

Examples of the cyclic ether compound include ethylene oxide, propylene oxide, butylene oxide, tetramethylene oxide, tetrahydrofuran and the like. Only one kind of these cyclic ether compounds may be used, or two or more kinds may be used in combination. Of these cyclic ether compounds, propylene oxide is particularly preferable from the viewpoint that an amorphous polyether polymer having relatively low viscosity can be obtained.

Specific examples of the initiator include alcohols such as ethylene glycol, propylene glycol, butane diol, hexamethylene glycol, neopentyl glycol, diethylene glycol, dipropylene glycol, triethylene glycol, glycerol, trimethylolmethane, trimethylolpropane, pentaerythritol, sorbitol and the like; polyoxyalkylene-based polymer such as polyoxypropylene diol, polyoxypropylene triol, polyoxyethylene diol, and polyoxyethylene triol. Number average molecular weight of the polyoxyalkylene-based polymer is preferably 300 to 4,000.

Examples of the method for synthesizing the polyoxyalkylene-based polymer include a polymerization method using an alkali catalyst such as KOH; a polymerization method using a transition metal compound-porphyrin complex catalyst such as a complex obtained by reacting an organic aluminum compound with porphyrin, as disclosed in JP 61-215623 A; a polymerization method using a double metal cyanide complex catalyst, as disclosed in, for example, JP 46-27250 B, JP 59-15336 B, and US 3,278,457, US 3,278,458, US 3,278,459, US 3,427,256, US 3,427,334, and US 3,427,335; a polymerization method using a catalyst containing a polyphosphagen salt, as disclosed in JP 10-273512 A; and a polymerization method using a catalyst consisting of a phosphagen compound, as disclosed in JP 11-060722 A, and the method is not particularly limited. The polymerization method using a double metal cyanide complex catalyst is more preferable due to the reasons like production costs and obtainment of polymers having a narrow molecular weight distribution.

The molecular weight distribution (Mw/Mn) of the polymer is not particularly limited. The molecular weight distribution is preferably narrow, and it is preferably less than 2.0, more preferably 1.6 or less, even more preferably 1.5 or less, and particularly preferably 1.4 or less.

The lower limit of the number average molecular weight of the polymer is, based on polystyrene by GPC, preferably 8,000 or more, more preferably 9,000 or more, and particularly preferably 10,000 or more. The upper limit thereof is preferably 50,000 or less, more preferably 35,000 or less, and particularly preferably 30,000 or less. When the number average molecular weight of the polymer is small, the viscosity becomes low to have improved workability during use of a curable composition. Incidentally, the obtained cured product tends to be hard and the elongation property tends to be deteriorated. On the other hand, when the molecular weight is too high, the concentration of the reactive silicon group becomes too low, and the curing rate may become slow. In addition, the viscosity tends to become high and the handling tends to be difficult.

A method of introducing reactive silicon groups is not particularly limited, and a known method can be utilized. Examples of the introduction method are shown below.
(i) Hydrosilylation: It is a method in which an unsaturated bond is introduced first into a polymer to be a raw material (hereinbelow to be also indicated as "prepolymer"), and a hydrosilane compound is added to the unsaturated bond by a hydrosilylation reaction. As for the introduction method of the unsaturated bond, any method can be employed. For example, a method including reacting a prepolymer having a functional group such as a hydroxyl group with a compound which exhibits reactivity to the functional group and has an unsaturated group to obtain a polymer containing an unsaturated group, a method including copolymerization of a polymerizable monomer having an unsaturated bond, and the like can be mentioned.
(ii) Reaction of reactive group-containing polymer (prepolymer) and silane coupling agent: It is a method in which a prepolymer having a reactive group such as a hydroxyl group, an amino group, and an unsaturated bond is reacted with a compound having both a group that reacts with a reactive group of the prepolymer to form a bond and a reactive silicon group (also referred to as a silane coupling agent) can be mentioned. Examples of the combination of a reactive group of a prepolymer and a reactive group of a silane coupling agent include a hydroxyl group and an isocyanate group, a hydroxyl group and an epoxy group, an amino group and an isocyanate group, an amino group and a thioisocyanate group, an amino group and an epoxy group, Michael addition of an amino group and an acrylic structure, a carboxy group and an epoxy group, an unsaturated bond and a mercapto group and the like, but are not limited thereto.

The method of (i) is preferable since the reaction is convenient, the amount of the reactive silicon group to be introduced can be controlled, and the physical property of the reactive silicon group-containing polymer to be obtained is stable. The method of (ii) is preferable since it has many alternatives of the reaction and the introduction rate of the reactive silicon group can be easily increased.

Part of the hydrosilane compounds used for the method of (i) are exemplified. Halogenated silanes such as trichlorosilane, dichloromethylsilane, dichlorophenylsilane, and (methoxymethyl)dichlorosilane; alkoxysilanes such as dimethoxymethylsilane, diethoxymethylsilane, trimethoxysilane, triethoxysilane, (chloromethyl)dimethoxysilane, and (methoxymethyl)dimethoxysilane; isopropenyloxysilanes (deacetone type) such as triisopropenyloxysilane, (chloromethyl)diisopropenyloxysilane, and (methoxymethyl)diisopropenyloxysilane can be mentioned.

As for the silane coupling agent that can be used in the method of (ii), the following compounds can be mentioned. Mercaptosilanes that react with unsaturated bond such as 3-mercaptopropyltrimethoxysilane, 3-mercaptopropyldimethoxymethylsilane, 3-mercaptopropyltriethoxysilane, mercaptomethyltriethoxysilane, and mercaptomethyldimethoxymethylsilane; isocyanate silanes that react with a hydroxyl group such as 3-isocyanatopropyltrimethoxysilane, 3-isocyanatopropyldimethoxymethylsilane, 3-isocyanatopropyltriethoxysilane, isocyanatomethyltrimethoxysilane, isocyanatomethyltriethoxysilane, and isocyanatomethyldimethoxymethylsilane; epoxy silanes that react with a hydroxyl group, an amino group, and a carboxylic acid group such as 3-glycidoxypropyltrimethoxysilane, 3-glycidoxypropyldimethoxymethylsilane, 3-glycidoxypropyltriethoxysilane, glycidoxymethyltrimethoxysilane, glycidoxymethyltriethoxysilane, and glycidoxymethyldimethoxymethylsilane; aminosilanes that react with isocyanate group and thioisocyanate group such as 3-aminopropyltrimethoxysilane, 3-aminopropyldimethoxymethylsilane, 3-aminopropyltriethoxysilane, 3-(2-aminoethyl)propyltrimethoxysilane, 3-(2-aminoethyl)propyldimethoxymethylsilane, 3-(2-aminoethyl)propyltriethoxysilane, 3-(N-ethylamino)-2-methylpropyltrimethoxysilane, 3-ureidopropyltrimethoxysilane, 3-ureidopropyltriethoxysilane, N-phenyl-3-aminopropyltrimethoxysilane, N-benzyl-3-aminopropyltrimethoxysilane, N-cyclohexylaminomethyltriethoxysilane, N-cyclohexylaminomethyldiethoxymethylsilane, N-phenylaminomethyltrimethoxysilane, (2-aminoethyl)aminomethyltrimethoxysilane, N,N'-bis[3-(trimethoxysilyl)propyl]ethylenediamine, and bis(3-(trimethoxysilyl)propyl)amine; and hydroxyalkylsilanes such as 3-hydroxypropyltrimethoxysilane and hydroxymethyltriethoxysilane. The above-mentioned silane coupling agents are mere examples, and a silyl group can be introduced by using or applying a similar reaction.

Other components such as urethane bond component and the like may be contained in the main chain skeleton of the polymer as long as the effects of the present invention are not markedly impaired. The urethane bond component is not particularly limited, and a group generated by a reaction of an isocyanate group and an active hydrogen group (hereinbelow to be also referred to as an amide segment) can be mentioned.

A cured product obtained by curing a curable composition containing a polymer having a urethane bond or an ester bond in the main chain sometimes provides effects of high hardness and high strength due to the action of a hydrogen bond and the like. On the other hand, a urethane bond may be cleaved due to the heat and the like. To impart such property to the curable composition, an amide segment may be introduced into the polymer or the amide segment may be intentionally eliminated. A polyoxyalkylene-based polymer having an amide segment tends to show high viscosity. Furthermore, a polyoxyalkylene-based polymer having an amide segment sometimes shows improved curability.

The above-mentioned amide segment is a group represented by the following general formula (2):

-NR³-C(=O)- (2)

(in which R³ represents an organic group having 1 to 10 carbon atoms or a hydrogen atom).

The aforementioned amide segment specifically includes a urethane group produced by a reaction of an isocyanate group and a hydroxy group, or an amino group and carbonate; a urea group produced by a reaction of an isocyanate group and an amino group; a thiourethane group produced by a reaction of an isocyanate group and a mercapto group and the like. Furthermore, a group produced by a further reaction of active hydrogen in the above-mentioned urethane group, urea group, and thiourethane group, and an isocyanate group is also encompassed in the group of the general formula (2).

Examples of the industrially feasible production method of a polyoxyalkylene-based polymer having an amide segment and a reactive silicon group include a method including reacting a polyoxyalkylene-based polymer having an active hydrogen-containing group on the terminal with an excess polyisocyanate compound to obtain a polymer having an isocyanate group on the terminal of the polyurethane-based main chain, and thereafter or simultaneously therewith, reacting a part or whole of the isocyanate group with a Z group of a silicon compound that is represented by the general formula (3):

Z-R⁴-SiR¹ₐX₃₋ₐ (3)

(in which R¹, X and a are as defined above. R⁴ is a divalent organic group, and more preferably a hydrocarbon group having 1 to 20 carbon atoms. Z is an active hydrogen-containing group selected from a hydroxy group, a carboxy group, a mercapto group and an amino group (primary or secondary)).

In addition, a method in which a polyoxyalkylene-based polymer having an active hydrogen-containing group on the terminal is reacted with a reactive silicon group-containing isocyanate compound represented by the general formula (4) can be mentioned:

O=C=N-R⁴-SiR¹ₐX₃₋ₐ (4)

(in which R⁴, R¹, X and a are as defined above).

The silicon compound represented by the general formula (3) is not particularly limited, and examples thereof include amino group-containing silanes such as γ-aminopropyldimethoxymethylsilane, γ-aminopropyltrimethoxysilane, N-(β-aminoethyl)-γ-aminopropyltrimethoxysilane, N-(β-aminoethyl)-γ-aminopropyldimethoxymethylsilane, (N-phenyl)-γ-aminopropyltrimethoxysilane, or N-ethylaminoisobutyltrimethoxysilane; hydroxy group-containing silanes such as γ-hydroxypropyltrimethoxysilane; and mercapto group-containing silanes such as γ-mercaptopropyltrimethoxysilane or mercaptomethyltriethoxysilane. As disclosed in JP 6-211879 A (US 5,364,955), JP 10-53637 A (US 5,756,751), JP 10-204144 A (EP 0,831,108 B), JP 2000-169544 A, and JP 2000-169545 A, the Michael addition reaction product between various α,β-unsaturated carbonyl compounds and a primary amino group-containing silane and also the Michael addition reaction product between various (meth)acryloyl group-containing silanes and a primary amino group-containing compound can be used as the silicon compound represented by the general formula (3).

The reactive silicon group-containing isocyanate compound represented by the general formula (4) is not particularly limited. Specific examples thereof include γ-trimethoxysilylpropylisocyanate, γ-triethoxysilylpropylisocyanate, γ-methyldimethoxysilylpropylisocyanate, γ-methyldiethoxysilylpropylisocyanate, γ-(methoxymethyl)dimethoxysilylpropylisocyanate, trimethoxysilylmethylisocyanate, triethoxymethylsilylmethylisocyanate, dimethoxymethylsilylmethylisocyanate, diethoxymethylsilylmethylisocyanate, and (methoxymethyl)dimethoxysilylmethylisocyanate.

When the main chain skeleton of the polymer contains an amide segment, the average number of the amide segment per 1 molecule is preferably 1 to 10, more preferably 1.5 to 5, and particularly preferably 2 to 3. When the average number of the amide segment per 1 molecule is less than 1, curability may not be sufficient, and when the average number of the amide segment per 1 molecule is larger than 10, there is a possibility that the polymer has high viscosity and thus handling becomes difficult.

When it is desired to lower the viscosity of the curable composition, improve workability, or the like, it is preferable that the main chain skeleton of the polymer substantially does not contain an amide segment.

The polymer may have two or more reactive silicon groups at one terminal site. As for the specific method for production, reference can be made to Patent Document (WO 2013/18020).

The average number of the terminal structure having reactive silicon groups contained in 1 molecule of the polymer is preferably 0.5 or more, more preferably 1.0 or more, even more preferably 1.1 or more, and most preferably 1.5 or more.

The average number of the reactive silicon groups to be contained in 1 molecule of the polymer is preferably 1.2 or more, more preferably 1.3 or more, and most preferably 1.5 or more. In addition, the average number of the reactive silicon groups to be contained in 1 molecule of the polymer is preferably 6.0 or less, more preferably 5.5 or less, and most preferably 5.0 or less. The average number of the reactive silicon groups of 1.2 or less is not preferable since a cured product with high strength may not be obtained. The average number of the reactive silicon groups 6.0 or more is not preferable since a cured product with high elongation may not be obtained.

The average number of the reactive silicon groups to be contained in 1 molecule of the polymer is defined to be an average number obtained by quantification of protons on carbon, which is directly bonded to a reactive silicon group, by high resolution ¹H-NMR method. In the calculation of the average number of the reactive silicon groups that are contained in one molecule of the polymer, a prepolymer into which a reactive silicon group is not introduced and a polymer obtained by side reaction, into which a reactive silicon group is not introduced, during introduction of a reactive silicon group into a prepolymer, are also considered to be part of components of the polymer having the same main chain structure and the calculation is performed as they are included in the parameter (molecule number) of calculation of the average number of the reactive silicon groups in one molecule.

Only one kind of the organic polymer (A) may be used, or two or more kinds of the organic polymer (A) may be used in combination.

### <Cyclic N-hydroamide compound (B)>

2-pyrrolidinone represented below is used herein from the viewpoint of the water-resistant adhesiveness.

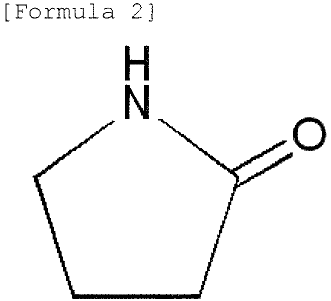

Blending amount of said cyclic N-hydroamide compound (B) is, relative to 100 parts by weight of the organic polymer (A), 1 to 5 parts by weight. If the blending amount of cyclic N-hydroamide compound (B) is low, there is a tendency that favorable water-resistant adhesiveness is not likely exhibited. On the other hand, if the blending amount of the cyclic N-hydroamide compound (B) is high, it is economically highly burdensome, and thus there is also concern about the influence on a surface state of a cured product.

### <Layered silicate mineral (C)>

As the curable composition additionally contains layered silicate mineral (C), the strength and water-resistant adhesiveness can be improved. The layered silicate mineral (C) is mineral in which Si-O tetrahedrons have a two-dimensional fishnet structure, and sometimes it is also referred to as phyllosilicate mineral.

Specific examples of the layered silicate mineral (C) include kaolinite, kaolin, mica, sericite, lizardite, amesite, nepouite, kellyite, fraiponite, dickite, nacrite, halloysite, talc, willemsite, kerolite, pimellite, pyrophyllite, saponite, hectorite, sauconite, stevensite, swinefordite, montmorillonite, beidellite, volkonskoite, black mica, gold mica, iron mica, polylithionite, celadonite, ferro-celadonite, ferro-aluminoceladonite, aluminoceladonite, soda mica, illite, glauconite, bramalite, wonesite, clintonite, pearl mica, penantite, nimite, donbasite, corrensite, hydrobiotite, aliettite, kulkeite, rectorite, tosudite, bentonite, dozylite, lunijianlite, and saliotite. Among them, from the viewpoint of industrial availability, kaolinite, mica, talc, montmorillonite, and bentonite are preferable. As for the layered silicate mineral (C), from the viewpoint of obtaining a curable composition which has low viscosity and favorable storage stability, a product obtained by calcination treatment is preferably used. By carrying out a surface treatment for the layered silicate mineral (C), the dispersion property with the organic polymer (A) can be enhanced. As for the surface treatment agent, a silane coupling agent is preferred. Average particle diameter, that is, D50 particle diameter, of the layered silicate mineral (C) is preferably 0.1 to 10 µm, and more preferably 0.5 to 4 µm. The D50 particle diameter is a volume-based median diameter that is measured by a particle diameter distribution measuring apparatus of a laser diffraction · scattering type.

The layered silicate mineral (C) is preferably 1 to 500 parts by weight, more preferably 20 to 300 parts by weight, and particularly preferably 30 to 200 parts relative to 100 parts by weight of the organic polymer (A). When the layered silicate mineral (C) is not blended, strength and water-resistant adhesiveness of a cured product to be obtained are insufficient. On the contrary, when it is present in an excessively large amount, elastic modulus of a cured product is excessively high, and thus there is a case in which lower adhesion strength is yielded. Among the layered silicate minerals, use of a binding product of kaolinite and quartz is particularly preferable from the viewpoint of obtaining the curable composition which has favorable initial adhesiveness and water-resistant adhesiveness. The binding product of kaolinite and quartz is sometimes described as "aggregate of kaolinite and quartz" or "united structure of kaolinite and quartz" in technical documents. That is, the "binding product of kaolinite and quartz", the "aggregate of kaolinite and quartz", and the "united structure of kaolinite and quartz" are generally known to mean the same, and sometimes the "binding product of kaolinite and quartz" is also called "Neuburg siliceous earth (siliceous earth)", "Sillitin", "Sillicolloid" and the like.

The binding product of kaolinite and quartz may be a naturally-occurring substance or an artificially produced product having the same structure as the naturally-occurring substance, with preference given to a natural binding product of plate kaolinite and bulk quartz. The binding product of kaolinite and quartz is preferably subjected to a calcination treatment and has a kaolinite content of 15% by weight or less, and more preferably 13% by weight or less, from the viewpoint of water-resistant adhesiveness and initial adhesion strength. While the lower limit of the kaolinite content is not particularly limited, 5% by weight or more is preferable. As the binding product of kaolinite and quartz, AKTISIL of HOFFMANN MINERAL GmbH such as Aktisil PF216 and SILFIT, AKTIFIT, Sillitin Z86, Sillitin Z86 puriss, Sillitin V85, Sillitin N82, Sillitin 85, Sillitin N87 and the like can be specifically mentioned. Of these, a grade subjected to a calcination treatment and having a kaolinite content of 15% by weight or less is particularly preferable.

An average particle diameter, that is, D50 particle diameter, of a binding product of kaolinite and quartz is preferably 1 to 3 µm, and more preferably 1.5 to 2.5 µm. The D50 particle diameter is a volume-based median diameter which is measured by a particle diameter distribution measuring apparatus of a laser diffraction·scattering type.

Furthermore, the binding product of kaolinite and quartz is preferably subjected to a surface treatment from the viewpoint of dispersion property in the organic polymer (A), and it is particularly preferably surface-treated with a silane coupling agent. While the silane coupling agent is not particularly limited, vinyl type unsaturated group-containing silanes (vinylsilanes) such as vinyltrimethoxysilane, vinyltriethoxysilane, γ-methacryloyloxypropylmethyldimethoxysilane, and γ-acryloyloxypropylmethyltriethoxysilane are preferable. The surface treatment can be performed by, for example, dispersing by stirring an untreated binding product of kaolinite and quartz by a blending machine at ambient temperature, and continuing stirring while additionally spraying a silane coupling agent. Furthermore, a commercially available binding product of kaolinite and quartz of which surface is treated with a silane coupling agent can be used as it is.

The layered silicate mineral (C) is preferably 1 to 500 parts by weight, more preferably 20 to 300 parts by weight, and particularly preferably 30 to 200 parts by weight relative to 100 parts by weight of the organic polymer (A). When the layered silicate mineral (C) is not blended, the obtained cured product is insufficient in the strength and water-resistant adhesiveness, and when the amount of the layered silicate mineral (C) is too much, the cured product sometimes has excessively high elastic modulus and thus yields decreased adhesion strength.

### <Curing catalyst>

The curable composition may be blended with a curing catalyst for the organic polymer (A) containing reactive silicon groups.

As for the curing catalyst, any known curing catalyst can be used. In particular, by using an amidine compound represented by the general formula (6):

R⁹N=CR¹⁰-NR¹¹₂ (6)

(R⁹, R¹⁰, and two R¹¹ are each independently a hydrogen atom or an organic group having 1 to 6 carbon atoms), a curable composition having good water-resistant adhesiveness can be given.

The amidine compound is not particularly limited, and examples thereof include pyrimidine compounds such as pyrimidine, 2-aminopyrimidine, 6-amino-2,4-dimethylpyrimidine, 2-amino-4,6-dimethylpyrimidine, 1,4,5,6-tetrahydropyrimidine, 1,2-dimethyl-1,4,5,6-tetrahydropyrimidine, 1-ethyl-2-methyl-1,4,5,6-tetrahydropyrimidine, 1,2-diethyl-1,4,5,6-tetrahydropyrimidine, 1-n-propyl-2-methyl-1,4,5,6-tetrahydropyrimidine, 2-hydroxy-4,6-dimethylpyrimidine, 1,3-diazanaphthalene, and 2-hydroxy-4-aminopyrimidine; imidazoline compounds such as 2-imidazoline, 2-methyl-2-imidazoline, 2-ethyl-2-imidazoline, 2-propyl-2-imidazoline, 2-vinyl-2-imidazoline, 1-(2-hydroxyethyl)-2-methyl-2-imidazoline, 1,3-dimethyl-2-iminoimidazolidine, and 1-methyl-2-iminoimidazolidin-4-one; amidine compounds such as 1,8-diazabicyclo[5.4.0]undec-7-ene (DBU), 1,5-diazabicyclo[4.3.0]non-5-ene, 2,9-diazabicyclo[4.3.0]non-1,3,5,7-tetraene, and 6-(dibutylamino)-1,8-diazabicyclo[5,4,0]undecene-7 (DBA-DBU); guanidine compounds such as guanidine, dicyandiamide, 1-methylguanidine, 1-ethylguanidine, 1-cyclohexylguanidine, 1-phenylguanidine, 1-(o-tolyl)guanidine, 1,1-dimethylguanidine, 1,3-dimethylguanidine, 1,2-diphenylguanidine, 1,1,2-trimethylguanidine, 1,2,3-trimethylguanidine, 1,1,3,3-tetramethylguanidine, 1,1,2,3,3-pentamethylguanidine, 2-ethyl-1,1,3,3-tetramethylguanidine, 1,1,3,3-tetramethyl-2-n-propylguanidine, 1,1,3,3-tetramethyl-2-isopropylguanidine, 2-n-butyl-1,1,3,3-tetramethylguanidine, 2-tert-butyl-1,1,3,3-tetramethylguanidine, 1,2,3-tricyclohexylguanidine, 1-benzyl-2,3-dimethylguanidine, 1,5,7-triazabicyclo[4.4.0]dec-5-ene, 7-methyl-1,5,7-triazabicyclo[4.4.0]dec-5-ene, 7-ethyl-1,5,7-triazabicyclo[4.4.0]dec-5-ene, 7-n-propyl-1,5,7-triazabicyclo[4.4.0]dec-5-ene, 7-isopropyl-1,5,7-triazabicyclo[4.4.0]dec-5-ene, 7-n-butyl-1,5,7-triazabicyclo[4.4.0]dec-5-ene, 7-cyclohexyl-1,5,7-triazabicyclo[4.4.0]dec-5-ene, and 7-n-octyl-1,5,7-triazabicyclo[4.4.0]dec-5-ene; and biguanide compounds such as biguanide, 1-methylbiguanide, 1-ethylbiguanide, 1-n-butylbiguanide, 1-(2-ethylhexyl)biguanide, 1-n-octadecylbiguanide, 1,1-dimethylbiguanide, 1,1-diethylbiguanide, 1-cyclohexylbiguanide, 1-allylbiguanide, 1-phenylbiguanide, 1-(o-tolyl)biguanide, 1-morpholinobiguanide, 1-n-butyl-N2-ethylbiguanide, 1,1'-ethylenebisbiguanide, 1,5-ethylenebiguanide, 1-[3-(diethylamino)propyllbiguanide, 1-[3-(dibutylamino)propyl]biguanide, and N',N"-dihexyl-3,12-diimino-2,4,11,13-tetraazatetradecane diamidine. Among the above amidine compounds, 1,8-diazabicyclo[5.4.0]undec-7-ene (DBU) is preferable from the viewpoint of having favorable water-resistant adhesiveness. DBU can also be used in the form in which it forms a salt with phenol or carboxylic acid.

The blending amount of the amidine compound is preferably 0.1 to 30 parts by weight, more preferably 0.1 to 12 parts by weight, and particularly preferably 0.1 to 2 parts by weight relative to 100 parts by weight of the organic polymer (A). When the amount of the amidine compound is less than 0.1 parts by weight, a practical curing rate of the curable composition sometimes cannot be obtained, and also the curing reaction tends to be difficult to proceed. On the other hand, when the amount of amidine compound exceeds 30 parts by weight, the cure time of the curable composition tends to be too short to degrade workability, and a bleed phenomenon including transfer of an amidine compound to the surface of a cured product tends to occur.

As for the curing catalyst, it is preferable to use an amidine compound. However, if necessary, other curing catalyst can be used in combination to the extent that the effects of the present invention are not inhibited.

A curing catalyst other than an amidine compound is not particularly limited, and examples thereof include metal carboxylates such as tin carboxylate, lead carboxylate, bismuth carboxylate, potassium carboxylate, calcium carboxylate, barium carboxylate, titanium carboxylate, zirconium carboxylate, hafnium carboxylate, vanadium carboxylate, manganese carboxylate, iron carboxylate, cobalt carboxylate, nickel carboxylate, and cerium carboxylate; titanium compounds such as tetrabutyl titanate, tetrapropyl titanate, titanium tetrakis(acetylacetonate), bis(acetylacetonate)diisopropoxytitanium, and diisopropoxytitanium bis(ethylacetoacetate); organic tin-based compounds such as dibutyl tin dilaurate, dibutyl tin maleate, dibutyl tin phthalate, dibutyl tin dioctanoate, dibutyl tin bis(2-ethylhexanoate), dibutyl tin bis(methylmaleate), dibutyl tin bis(ethylmaleate), dibutyl tin bis(butylmaleate), dibutyl tin bis(octylmaleate), dibutyl tin bis(tridecylmaleate), dibutyl tin bis(benzylmaleate), dibutyl tin diacetate, dioctyl tin bis(ethylmaleate), dioctyl tin bis(octylmaleate), dibutyl tin dimethoxide, dibutyl tin bis(nonylphenoxide), dibutenyl tin oxide, dibutyl tin oxide, dibutyl tin bis(acetylacetonate), dibutyl tin bis(ethylacetoacetonate), reaction product of dibutyl tin oxide and a silicate compound, dioctyl tin bis(neodecanoate), dioctyl tin dilaurate, reaction product of dibutyl tin oxide and a phthalate and reaction product of dioctyl tin salt and ethyl orthosilicate; aluminum compounds such as aluminum tris(acetylacetonate), aluminum tris(ethylacetoacetate) and diisopropoxyaluminum ethylacetoacetate; zirconium compounds such as zirconium tetrakis(acetylacetonate); various metal alkoxides such as tetrabutoxy hafnium; organic acidic phosphoric ester; organic sulfonic acids such as trifluoromethanesulfonic acid; and inorganic acids such as hydrochloric acid, phosphoric acid, and boronic acid. A combined use of these curing catalysts other than amidine compound with amidine compound is expected to enhance catalyst activity and improve depth curability and thin layer curability of the curable composition, adhesiveness of a cured product to be obtained and the like.

Among them, when an organic tin-based compound such as reaction product of dioctyl tin salt and ethyl orthosilicate is used in combination with an amidine compound, the water-resistant adhesiveness can be further improved. However, the toxicity of the curable composition tends to increase as the blending amount of organic tin increases. Therefore, the amount of the organic tin-based compound is preferably smaller. More specifically, it is preferably 1 part by weight or less, and more preferably 0.5 parts by weight or less relative to 100 parts by weight of the organic polymer (A).

### <Plasticizer>

A plasticizer may be added to the curable composition. According to the addition of a plasticizer, it is possible to control the viscosity and slump properties of the curable composition and the mechanical properties such as hardness, tensile strength, and elongation of a cured product obtained by curing the curable composition. Specific examples of the plasticizer include phthalic acid ester compounds such as dibutyl phthalate, diisononyl phthalate (DINP), diheptyl phthalate, di(2-ethylhexyl) phthalate, diisodecyl phthalate (DIDP), or butylbenzyl phthalate; terephthalic acid ester compounds such as bis(2-ethylhexyl)-1,4-benzene dicarboxylate (specifically, Eastman 168 (product name) available from Eastman Chemical Company); non-phthalic acid ester compounds such as 1,2-cyclohexane dicarboxylic acid diisononyl ester (specifically, Hexamoll DINCH (product name) available from BASF); aliphatic polycarboxylic acid ester compounds such as dioctyl adipate, dioctyl sebacate, dibutyl sebacate, diisodecyl succinate, and acetyl tributyl citrate; unsaturated fatty acid ester compounds such as butyl oleate or methyl acetyl ricinoleate; alkyl sulfonic acid phenyl esters (specifically, Mesamoll (product name) available from Lanxess); phosphoric acid ester compounds such as tricresyl phosphate or tributyl phosphate; trimellitate compounds; chlorinated paraffins; hydrocarbon oils such as alkyl diphenyl or partially hydrogenated terphenyl; process oil; and epoxy plasticizers such as epoxidized soybean oil and benzyl epoxystearate.

Furthermore, a high molecular weight plasticizer can be also used. When a high molecular weight plasticizer is used, the initial physical properties can be maintained for a long period of time as compared to the use of a low molecular weight plasticizer. Furthermore, drying property (i.e., application property) when alkyd paint is applied to a cured product of the curable composition can be improved. Specific examples of the high molecular weight plasticizer include a vinyl polymer obtained by polymerization of a vinyl monomer by various methods; ester compounds of an aliphatic alcohol having two or more alcoholic hydroxyl groups such as diethylene glycol dibenzoate, triethylene glycol dibenzoate, and pentaerythritol ester; polyester-based plasticizer obtained from a dibasic acid such as sebacic acid, adipic acid, azelaic acid, and phthalic acid, and a divalent alcohol such as ethylene glycol, diethylene glycol, triethylene glycol, propylene glycol, and dipropylene glycol; polyethers such as polyether polyols having a number average molecular weight of 500 or more, further 1,000 or more, such as polyethylene glycol polypropylene glycol, and polytetramethylene glycol, derivatives in which the hydroxy group of these polyether polyols is converted to ester group, ether group and the like; polystyrenes such as polystyrene, and poly-α-methylstyrene; polybutadiene, polybutene, polyisobutylene, butadiene-acrylonitrile, and polychloroprene but are not limited thereto.

The amount of the plasticizer to be used is preferably 5 to 150 parts by weight, more preferably 10 to 120 parts by weight, and particularly preferably 20 to 100 parts by weight relative to 100 parts by weight of the organic polymer (A). When the content is less than 5 parts by weight, the effect of the plasticizer is not exhibited, and when it exceeds 150 parts by weight, the mechanical strength of a cured product tends to be insufficient. The plasticizer may be used either singly or in combination of two or more types thereof. In addition, a low molecular weight plasticizer and a high molecular weight plasticizer may be used in combination. The plasticizer can also be added during production of polymer.

### <Solvent or diluent>

To the curable composition, a solvent or a diluent may be added. The solvent and diluent are not particularly limited, but aliphatic hydrocarbons, aromatic hydrocarbons, alicyclic hydrocarbons, halogenated hydrocarbons, alcohols, ester, ketones, ethers, or the like can be used. When a solvent or a diluent is used, in view of the air contamination problem when the composition is used inside, the boiling point of the solvent is preferably not less than 150°C, more preferably not less than 200°C, and particularly preferably not less than 250°C. The solvent or diluent may be used either singly or in combination of two or more types thereof.

### <Adhesiveness imparting agent>

The curable composition may be added with, as an adhesiveness imparting agent, a silane coupling agent, a reaction product of a silane coupling agent, or a compound other than silane coupling agents.

Specific examples of such silane coupling agent include epoxy group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane, and β-(3,4-epoxycyclohexyl)ethyltriethoxysilane; amino group-containing silane coupling agents such as γ-aminopropyltrimethoxysilane, γ-aminopropyltriethoxysilane, γ-aminopropylmethyldimethoxysilane, γ-aminopropylmethyldiethoxysilane, N-β-aminoethyl-γ-aminopropyltrimethoxysilane, N-β-aminoethyl-γ-aminopropylmethyldimethoxysilane, N-β-aminoethyl-γ-aminopropyltriethoxysilane, N-β-aminoethyl-γ-aminopropylmethyldiethoxysilane, γ-ureidopropyltrimethoxysilane, N-phenyl-γ-aminopropyltrimethoxysilane, N-benzyl-γ-aminopropyltrimethoxysilane, N-vinylbenzyl-γ-aminopropyltriethoxysilane, (aminomethyl)dimethoxymethylsilane, (aminomethyl)trimethoxysilane, (phenylaminomethyl)dimethoxymethylsilane, (phenylaminomethyl)trimethoxysilane, and bis(3-trimethoxysilylpropyl)amine; isocyanate group-containing silanes such as γ-isocyanatopropyltrimethoxysilane, γ-isocyanatopropyltriethoxysilane, γ-isocyanatopropylmethyldiethoxysilane, γ-isocyanatopropylmethyldimethoxysilane, α-isocyanatomethyltrimethoxysilane, and α-isocyanatomethyldimethoxymethylsilane; mercapto group-containing silanes such as γ-mercaptopropyltrimethoxysilane, γ-mercaptopropyltriethoxysilane, γ-mercaptopropylmethyldimethoxysilane, and γ-mercaptopropylmethyldiethoxysilane; carboxysilanes such as β-carboxyethyltriethoxysilane, β-carboxyethylphenylbis(β-methoxyethoxy)silane, and N-β-(carboxymethyl)aminoethyl-γ-aminopropyltrimethoxysilane; vinyl type unsaturated group-containing silanes such as vinyltrimethoxysilane, vinyltriethoxysilane, γ-methacryloyloxypropylmethyldimethoxysilane, and γ-acryloyloxypropylmethyltriethoxysilane; halogen-containing silanes such as γ-chloropropyltrimethoxysilane; isocyanurate silanes such as tris(trimethoxysilyl)isocyanurate; carbamate silanes such as methyl (N-dimethoxymethylsilylmethyl)carbamate, methyl (N-trimethoxysilylmethyl)carbamate, methyl (N-dimethoxymethylsilylpropyl)carbamate, and methyl (N-trimethoxysilylpropyl)carbamate; alkoxy group-containing silanes such as (methoxymethyl)dimethoxymethylsilane, (methoxymethyl)trimethoxysilane, (ethoxymethyl)trimethoxysilane, and (phenoxymethyl)trimethoxysilane; and acid anhydride-containing silanes such as 3-(trimethoxysilyl)propylsuccinic anhydride, and 3-(triethoxysilyl)propylsuccinic anhydride. In addition, partial condensates of these silanes, and modified derivatives of these silanes, such as amino-modified silyl polymer, silylated amino polymer, unsaturated aminosilane complex, phenylamino long chain alkylsilane, aminosilylated silicone, and silylated polyester can also be used as silane coupling agents. The silane coupling agent may be used either singly or in combination of two or more types thereof. The reaction product of silane coupling agent includes a reaction product of isocyanate silane and a hydroxyl group-containing compound, an amino group-containing compound or the like; a Michael addition reaction product of aminosilane; a reaction product of aminosilane and an epoxy group-containing compound; a reaction product of epoxy silane and a carboxylic acid group-containing compound, an amino group-containing compound or the like.

The use amount of the silane coupling agent is, relative to 100 parts by weight of the organic polymer (A), preferably 0.1 to 20 parts by weight, and particularly preferably 0.5 to 10 parts by weight.

Specific examples of the adhesiveness imparting agent other than the silane coupling agent include, although not particularly limited, epoxy resin, phenol resin, sulfur, alkyl titanates, and aromatic polyisocyanate. The adhesiveness imparting agent may be used either singly or two or more types of them may be used as a mixture. By adding those adhesiveness imparting agents, adhesiveness to an adherend can be improved.

### <Silicate>

The curable composition may be added with silicate. The silicate acts as a crosslinking agent and has a function to improve recovery property, durability, and creep resistance of a cured product which is obtained from the curable composition. Furthermore, silicate also has an effect of improving the adhesiveness and water-resistant adhesiveness, as well as adhesion durability under high temperature and high humidity conditions. As for the silicate, tetraalkoxysilane and alkylalkoxysilane, or a partially hydrolyzed condensate thereof can be used.

Specific examples of the silicate include tetraalkoxysilane (tetraalkylsilicate) such as tetramethoxysilane, tetraethoxysilane, ethoxytrimethoxysilane, dimethoxydiethoxysilane, methoxytriethoxysilane, tetra-n-propoxysilane, tetra-i-propoxysilane, tetra-n-butoxysilane, tetra-i-butoxysilane, or tetra-t-butoxysilane, and a partially hydrolyzed condensate thereof.

The partially hydrolyzed condensate of tetraalkoxysilane is more preferred because the effect of improving recovery property, durability, and creep resistance of a cured product of the curable composition is higher than that of tetraalkoxysilane.

Examples of the partially hydrolyzed condensate of tetraalkoxysilane include a condensate which is obtained by adding water to tetraalkoxysilane followed by partial hydrolysis and condensation according to a common method. As for the partially hydrolyzed condensate of an organosilicate compound, a commercially available product can be used. Examples of the condensate include methyl silicate 51 and ethyl silicate 40 (both manufactured by COLCOAT CO., LTD.).

In the case of using the silicate, use amount thereof is, relative to 100 parts by weight of the organic polymer (A), 0.1 to 20 parts by weight, and preferably 0.5 to 10 parts by weight.

### <Filler>

The curable composition may be blended with various fillers other than the layered silicate mineral (C). Examples of the filler include reinforcing fillers such as fumed silica, precipitated silica, crystal silica, molten silica, dolomite, silicic anhydride, hydrous silicate, aluminum hydroxide, and carbon black; fillers such as ground calcium carbonate, colloidal calcium carbonate, magnesium carbonate, diatomaceous earth, titanium oxide, organic bentonite, ferric oxide, aluminum fine powder, flint powder, zinc oxide, activated zinc oxide, resin powder such as PVC powder, and PMMA powder, fiber fillers such as asbestos, glass fiber, and filament.

The filler can be dried in advance by dehydration including, as described in Japanese Unexamined Patent Application, Publication No. 2001-181532, uniformly mixing the filler with a dehydrating agent such as oxidation calcium and the like, sealing the mixture in a bag made of an air-tight material, and leaving the bag for a suitable time period. Using this low water content filler, the storage stability can be improved in case of having a one-liquid type composition, in particular.

When a cured product with a highly adhesive strength is desired by using these fillers, a filler mainly selected from fumed silica, precipitated silica, crystal silica, molten silica, dolomite, silicic anhydride, hydrous silicate, carbon black, aluminum hydroxide, surface-treated fine calcium carbonate, activated zinc oxide and the like is preferable. The use amount of the filler is preferably 1 to 200 parts by weight relative to 100 parts by weight of the organic polymer (A) .

When a cured product having a low strength and a high elongation at break is desired to be obtained, preferable results can be obtained by using, within a range of from 5 to 200 parts by weight relative to 100 parts by weight of the organic polymer (A), a filler selected from titanium oxide, calcium carbonate such as ground calcium carbonate and the like, magnesium carbonate, ferric oxide, zinc oxide, and Shirasu balloon and the like. In general, calcium carbonate having a greater specific surface area shows greater improving effect on the tensile strength at break, elongation at break, and adhesiveness of the cured product. When calcium carbonate is used, surface-treated fine calcium carbonate and calcium carbonate having a large particle diameter such as ground calcium carbonate are desirably used in combination. The particle diameter of surface-treated fine calcium carbonate is preferably 0.5 µm or less, and a surface treatment is preferably performed using fatty acid or fatty acid salt. The particle diameter of calcium carbonate having a large particle diameter is preferably 1 µm or more and calcium carbonate free of a surface treatment can be used. Examples of the surface treating agent for producing surface-treated calcium carbonate powder include, but are not limited to, carboxylic acids and esters thereof such as fatty acid or unsaturated fatty acid represented by palmitic acid, caprylic acid, capric acid, lauric acid, stearic acid, arachidic acid, behenic acid, lignoceric acid, oleic acid, linoleic acid, and linolenic acid, and rosin acid-based compound and the like, silane compounds such as hexamethyldisilazane, chlorosilane, aminosilane, paraffin-based compound and the like. The surface treating agent is preferably carboxylic acid in particular, because, in the case of preparing a curable silicone-based resin composition, it is more unlikely to have an occurrence of curing retardation. Furthermore, among carboxylic acids, saturated fatty acid and unsaturated fatty acid are particularly preferable, since curing retardation more hardly occurs. Of course, those fillers may be used either singly or two or more types thereof may be used as a mixture. Fatty acid surface-treated colloidal calcium carbonate and calcium carbonate having a particle diameter of 1 µm or more such as ground calcium carbonate free of a surface treatment can also be used in combination.

The amount of the filler to be used is preferably 1 to 300 parts by weight, and particularly preferably 10 to 200 parts by weight relative to 100 parts by weight of the organic polymer (A).

To improve the handling property (disconnection and the like) of the curable composition or to have a matte surface of the cured product, organic balloon, or inorganic balloon may be added. Such fillers can be subjected to a surface treatment. Only one kind of those fillers may be used, or two or more kinds thereof may be mixed and used. For improved workability (disconnection and the like), the particle diameter of the balloon is preferably 0.1 mm or less. For having a matte surface of the cured product, the particle diameter of the balloon is preferably 5 to 300 µm.

### <Anti-sagging agent>

The curable composition may contain an anti-sagging agent, as necessary, to prevent sagging and improve workability. While the anti-sagging agent is not particularly limited, for example, polyamide wax; hydrogenated castor oil derivatives; metal soaps such as calcium stearate, aluminum stearate, barium stearate and the like can be mentioned as examples. When a rubber powder having a particle size of 10 to 500 µm as described in Japanese Unexamined Patent Application, Publication No. H11-349916 or an organic fiber as described in Japanese Unexamined Patent Application, Publication No. 2003-155389 is used, a composition showing high thixotropy and good workability can be obtained. Such anti-sagging agent may be used either singly, or two or more kinds thereof may be used in combination. The amount of the anti-sagging agent to be used is preferably 0.1 to 20 parts by weight relative to 100 parts by weight of the organic polymer (A).

### <Fluorescent whitening agent>

The curable composition may be added with a fluorescent whitening agent, if necessary. By using a fluorescent whitening agent, transparency of the curable composition can be enhanced. Examples of the fluorescent whitening agent include benzoxazole-based, coumarine-based, pyrazoline-based, and stilben-based fluorescent whitening agents, and coumarine-based fluorescent whitening agent like Whitefluor B (trade name, manufactured by Sumitomo Chemical Company, Limited) is preferable.

The fluorescent whitening agent is preferably 0.01 to 10 parts by weight relative to 100 parts by weight of the organic polymer (A).

### <Antioxidant (anti-aging agent), light stabilizer, UV absorber>

The curable composition may be added with an antioxidant (anti-aging agent). When an anti-oxidant is used, weather resistance of a cured product can be enhanced. Examples of the anti-oxidant include hindered phenol-based anti-oxidant, monophenol-based anti-oxidant, bisphenol-based anti-oxidant, and polyphenol-based anti-oxidant, and hindered phenol-based anti-oxidant is particularly preferable. Similarly, hindered amine light stabilizer such as Tinuvin 622 LD, Tinuvin 144; CHIMASSORB944LD, CHIMASSORB119FL (each of the above manufactured by Ciba Japan K.K.); ADK STAB LA-57, ADK STAB LA-62, ADK STAB LA-67, ADK STAB LA-63, and ADK STAB LA-68 (each of the above is manufactured by ADEKA CORPORATION); Sanol LS-770, Sanol LS-765, Sanol LS-292, Sanol LS-2626, Sanol LS-1114, and Sanol LS-744 (each of the above is manufactured by Sankyo Lifetech Co., Ltd.), and the like can also be used. Specific examples of the anti-oxidant are also recited in Japanese Unexamined Patent Application, Publication No. H4-283259 and Japanese Unexamined Patent Application, Publication No. H9-194731.

The amount of the antioxidant to be used is preferably 0.1 to 10 parts by weight, and particularly preferably 0.2 to 5 parts by weight relative to 100 parts by weight of the organic polymer (A).

### <Light stabilizer>

The curable composition may be added with a light stabilizer. Use of a light stabilizer prevents degradation of a cured product caused by photooxidation. Examples of the light stabilizer include benzotriazole-based, hindered amine-based, benzoate-based compounds and the like, and a hindered amine-based compound is particularly preferable.

The amount of the light stabilizer to be used is preferably 0.1 to 10 parts by weight, and particularly preferably 0.2 to 5 parts by weight relative to 100 parts by weight of the organic polymer (A).

When a photocurable substance, particularly an unsaturated acrylic compound, is added to the curable composition, a tertiary amine-containing hindered amine-based light stabilizer is preferably used as a hindered amine-based light stabilizer, as described in Japanese Unexamined Patent Application, Publication No. H5-70531, to improve preservation stability of the composition. Examples of the tertiary amine-containing hindered amine-based light stabilizer include light stabilizers such as Tinuvin 622 LD, Tinuvin 144; CHIMASSORB119FL (each of the above manufactured by Ciba Japan K.K.); ADK STAB LA-57, LA-62, LA-67, LA-63 (each of the above is manufactured by ADEKA CORPORATION); Sanol LS-765, LS-292, LS-2626, LS-1114, LS-744 (each of the above is manufactured by Sankyo Lifetech Co., Ltd.), and the like.

The curable composition may be added with a UV absorber. When a UV absorber is used, weather resistance of the surface of a cured product can be enhanced. Examples of the UV absorber include benzophenone-based, benzotriazole-based, salicylate-based, substituted tolyl-based and metal chelate-based compounds, and oxanilide-based compounds such as commercially available SABO STAB UV312 (manufactured by SABO), and benzotriazole-based compound is particularly preferable, and trade names Tinuvin P, Tinuvin 213, Tinuvin 234, Tinuvin 326, Tinuvin 327, Tinuvin 328, Tinuvin 329, and Tinuvin 571 (all manufactured by BASF) can be mentioned. Particularly preferred is a 2-(2H-1,2,3-benzotriazol-2-yl)-phenol-based compound. Furthermore, a combined use of a phenol-based or hindered phenol-based antioxidant, and a hindered amine-based light stabilizer, and a benzotriazole-based UV absorber is preferable. The amount of the UV absorber to be used is preferably 0.1 to 10 parts by weight, and particularly preferably 0.2 to 5 parts by weight relative to 100 parts by weight of the organic polymer (A). The above antioxidant, light stabilizer, and UV absorber can be suitably selected depending on use temperature, exposure environment, transparency requirement, or the like.

### <Physical property modifying agent>

The curable composition may be added with a physical property modifying agent, as necessary, that controls the tensile property of a cured product to be generated. The physical property modifying agent is not particularly limited, but examples thereof include alkylalkoxysilanes such as phenoxytrimethylsilane, methyltrimethoxysilane, dimethyldimethoxysilane, trimethylmethoxysilane, and n-propyltrimethoxysilane; arylalkoxysilanes such as diphenyldimethoxysilane, and phenyltrimethoxysilane; alkylisopropenoxysilanes such as dimethyldiisopropenoxysilane, methyltriisopropenoxysilane, and γ-glycidoxypropylmethyldiisopropenoxysilane; trialkylsilyl borates such as tris(trimethylsilyl) borate, and tris(triethylsilyl) borate; silicone varnish; polysiloxanes and the like. By using the physical property modifying agent, the hardness of the curable composition after curing may be increased or conversely decreased to improve elongation at break. Only one kind of the above-mentioned physical property modifying agent may be used, or two or more kinds thereof may be used in combination.

Particularly, a compound which generates a compound having a monovalent silanol group in a molecule by hydrolysis has an activity of lowering the modulus of the cured product without worsening the stickiness of the surface of the cured product. Particularly, a compound which generates trimethylsilanol is preferable. As a compound which generates a compound having a monovalent silanol group in a molecule by hydrolysis, a compound described in JP 5-117521 A can be mentioned as an example. In addition, a compound that forms a silicon compound to generate R3SiOH such as trimethylsilanol and the like by hydrolysis, which is a derivative of alkyl alcohol such as hexanol, octanol, decanol and the like, a compound that forms a silicon compound to generate R3SiOH such as trimethylsilanol and the like by hydrolysis, which is a derivative of polyvalent alcohol having not less than 3 hydroxyl groups, such as trimethylolpropane, glycerol, pentaerythritol, sorbitol and the like as described in Japanese Unexamined Patent Application, Publication No. H11-241029 can be mentioned as an example.

Furthermore, a compound that forms a silicon compound to generate R₃SiOH such as trimethylsilanol and the like by hydrolysis, which is a derivative of an oxypropylene polymer described in Japanese Unexamined Patent Application, Publication No. H7-258534 can be mentioned as an example. Furthermore, polyoxyalkylene-based polymer having a crosslinkable hydrolyzable silicon group and a silicon group, which can be a monosilanol-containing compound by hydrolysis as described in Japanese Unexamined Patent Application, Publication No. H6-279693, can also be used.

### <Adhesiveness imparting resin>

According to a purpose of enhancing the adhesiveness or tight-adhesion property to a base material or other necessities, the curable composition may be added with an adhesiveness imparting resin. The adhesiveness imparting resin is not particularly limited, and a commonly used resin having adhesion imparting property can be used.

Specific examples thereof include terpene-based resin, aromatic modified terpene resin, hydrogenated terpene resin obtained by hydrogenating same, terpene-phenol resin obtained by copolymerizing terpenes with phenols, phenol resin, modified phenol resin, xylene-phenol resin, cyclopentadiene-phenol resin, coumarone-indene resin, rosin resin, rosin ester resin, hydrogenated rosin ester resin, xylene resin, low-molecular weight polystyrene-based resin, styrene copolymer resin, petroleum resin (for example, C5 hydrocarbon resin, C9 hydrocarbon resin, C5C9 hydrocarbon copolymer resin etc.), hydrogenated petroleum resin, DCPD resin and the like. These may be used either singly, or two or more kinds thereof may be used in combination.

The styrene block copolymer and a hydrogenated product thereof are not particularly limited, and examples thereof include styrene-butadiene-styrene block copolymer (SBS), styrene-isoprene-styrene block copolymer (SIS), styrene-ethylene butylene-styrene block copolymer (SEBS), styrene-ethylenepropylene-styrene block copolymer (SEPS), styrene-isobutylene-styrene block copolymer (SIBS) and the like.

Of these, a terpene-phenol resin is preferable since it shows high compatibility with the polymer and plasticizer and allows obtainment of high tightly adhering effect. On the other hand, when color tone is important, a hydrocarbon resin is preferable.

The amount of the adhesiveness imparting resin to be used is preferably 2 to 100 parts by weight, more preferably 5 to 50 parts by weight, and even more preferably 5 to 30 parts by weight relative to 100 parts by weight of the organic polymer (A). When the content is less than 2 parts by weight, an adhesion and tight adhesion effect to a base material is difficult to obtain, and when it exceeds 100 parts by weight, there may be a case in which the viscosity of a curable composition becomes too high and handling becomes difficult.

### <Epoxy group-containing compound>

The curable composition may be added with an epoxy group-containing compound. By the use of a compound containing an epoxy group, the recovery property of the cured product can be increased. As a compound containing an epoxy group, epoxidized unsaturated fats and oils, epoxidized unsaturated fatty acid esters, alicyclic epoxy compounds, compounds shown as epichlorohydrin derivative and mixtures thereof and the like can be mentioned as examples. Specifically, epoxidized soy bean oil, epoxidized linseed oil, bis(2-ethylhexyl)-4,5-epoxycyclohexane-1,2-dicarboxylate (E-PS), epoxyoctyl stearate, epoxybutyl stearate and the like can be mentioned as examples. Of these, E-PS is particularly preferable. An epoxy compound is preferably used within a range of 0.5 to 50 parts by weight relative to 100 parts by weight of the organic polymer (A).

### <Photocurable substance>

The curable composition may be added with photocurable substance. When a photocurable substance is used, a film of the photocurable substance is formed on the surface of the cured product, and thus the stickiness and weather resistance of the cured product can be improved. The photocurable substance causes chemical changes of the molecular structure in a considerably short time and produces physical changes such as curing by the action of light. As such kinds of compounds, many are known such as organic monomer, oligomer, resin, and compositions containing the same, and any commercially available product can be employed. As a representative photocurable substance, unsaturated acrylic compounds, polyvinyl cinnamates, azide resins and the like can be used. Examples of the unsaturated acrylic compound include monomers, oligomers or mixtures thereof, having one to several acrylic or methacrylic unsaturated groups, which are monomers such as propylene (or butylene, ethylene) glycol di(meth)acrylate, and neopentyl glycol di(meth)dimethacrylate, or oligoesters having a molecular weight of 10,000 or less. Specific examples include special acrylate (bifunctional) Aronix M-210, Aronix M-215, Aronix M-220, Aronix M-233, Aronix M-240, Aronix M-245; (trifunctional) Aronix M305, Aronix M-309, Aronix M-310, Aronix M-315, Aronix M-320, Aronix M-325, and (polyfunctional) Aronix M-400 and the like, and particularly, a compound containing an acrylic functional group is preferable, and a compound containing three or more same functional groups on average in one molecule is preferable (all Aronix recited above are a product of Toagosei Co., Ltd.).

Examples of polyvinyl cinnamate include a photosensitive resin having a cinnamoyl group as a photosensitive group, in which polyvinyl alcohol is esterified by cinnamic acid, and many other polyvinyl cinnamate derivatives are also exemplified. Azide resin is known to be a photosensitive resin containing an azide group as a photosensitive group. Azide resin is generally a rubber photosensitive liquid added with a diazide compound as a photosensitizer, and detailed examples are disclosed in "Photosensitive Resin" (published by Insatsu Gakkai Shuppanbu Ltd., page 93-, page 106-, page 117-, published on March 17, 1972). They can be used singly or mixed and added with a sensitizer as necessary and used. Incidentally, when a sensitizer such as ketones and nitro compound or a promoter such as amines is added, the effect is sometimes enhanced. The amount of the photocurable substance to be used is within a range of 0.1 to 20 parts by weight, and preferably 0.5 to 10 parts by weight relative to 100 parts by weight of the organic polymer (A), and when the amount is 0.1 parts by weight or less, there is no effect of enhancing the weather resistance, and when the amount is 20 parts by weight or more, the cured product becomes too hard and tends to yield a crack.

### <Oxygen curable substance>

The curable composition may be added with an oxygen curable substance. As the oxygen curable substance, an unsaturated compound reactive with oxygen in the air can be mentioned as an example. The oxygen curable substance exhibits actions such as preventing of stickiness of the surface and attachment of dust or dirt to the surface of the cured product by reacting with oxygen in the air and forming of a cured film near the surface of the cured product. Specific examples of the oxygen curable substance include dry oil represented by tung oil, linseed oil and the like, various alkyd resins obtained by modifying a corresponding compound; acrylic polymer, epoxy resin and silicone resin, each modified by dry oil; liquid polymers such as 1,2-polybutadiene, 1,4-polybutadiene, and C5 to C8 diene polymer obtained by polymerization or copolymerization of diene compounds such as butadiene, chloroprene, isoprene, and 1,3-pentadiene, liquid copolymers such as NBR and SBR obtained by copolymerization of monomers such as acrylonitrile and styrene, which are copolymerizable with those diene compounds, such that the diene compound becomes the main component, and various modified products of the above (maleic modified products, boil oil modified products and the like) and the like. They may be used either singly, or two or more kinds thereof may be used in combination. Of these, tung oil and liquid diene polymer are particularly preferable. Furthermore, combined use of a catalyst promoting the oxidation curing reaction or a metal dryer may enhance the effect thereof. As such catalyst and metal dryer, metal salts such as cobalt naphthenate, lead naphthenate, zirconium naphthenate, cobalt octylate, and zirconium octylate, amidine compound and the like can be mentioned as an example. The use amount of the oxygen curable substance is preferably within a range of 0.1 to 20 parts by weight, and more preferably 0.5 to 10 parts by weight relative to 100 parts by weight of the organic polymer (A). When the use amount is less than 0.1 parts by weight, improvement of the contamination property becomes insufficient, and when it exceeds 20 parts by weight, the tensile property and the like of the cured product tend to be impaired. As described in JP 3-160053 A, the oxygen curable substance is preferably used in combination with a photocurable substance.

### <Epoxy resin>

The curable composition may be added with an epoxy resin. The composition added with an epoxy resin is particularly preferable as an adhesive, especially an adhesive for exterior wall tiles. Examples of the epoxy resin include, but are not limited to, flame-retardant epoxy resins such as epichlorohydrin-bisphenol A epoxy resin, epichlorohydrin-bisphenol F epoxy resin, tetrabromobisphenol A glycidyl ether and the like, novolac epoxy resin, hydrogenated bisphenol A epoxy resin, glycidyl ether epoxy resin of bisphenol A propylene oxide adduct, p-oxybenzoic acid glycidyl ether ester epoxy resin, m-aminophenol-based epoxy resin, diaminodiphenylmethane-based epoxy resin, urethane modified epoxy resin, various kinds of alicyclic epoxy resins, N,N-diglycidyl aniline, N,N-diglycidyl-o-toluidine, triglycidyl isocyanurate, polyalkylene glycol diglycidyl ether, glycidyl ethers of polyvalent alcohol such as glycerol and the like, hydantoin epoxy resin, epoxy product of unsaturated polymers such as petroleum resin and the like. The epoxy resin is not limited to them, and any epoxy resin that is commonly used can be also used. An epoxy resin containing at least two epoxy groups in a molecule is preferable, since it shows high reactivity during curing, and a cured product easily forms a three-dimensional network and the like. More preferred epoxy resin is bisphenol A type epoxy resins or novolac type epoxy resin and the like. The ratio (weight ratio) of these epoxy resins to be used is in the range as follows: the organic polymer (A)/epoxy resin = 100/1 to 1/100. When the ratio of the organic polymer (A)/epoxy resin is less than 1/100, an improvement effect on the impact strength and toughness by the epoxy resin cured product is difficult to obtain, and when the ratio of the organic polymer (A)/epoxy resin exceeds 100/1, strength of a cured product of the polymer is insufficient. A preferable use ratio cannot be determined unconditionally, since it varies depending on the use of a curable resin composition and the like, but, when impact resistance, flexibility, toughness, peel strength and the like of an epoxy resin cured product are to be improved, for example, the polymer is preferably used at 1 to 100 parts by weight, and more preferably 5 to 100 parts by weight relative to 100 parts by weight of epoxy resin. On the other hand, when the strength of a cured product is to be improved, 1 to 200 parts by weight, and more preferably 5 to 100 parts by weight of an epoxy resin is used relative to 100 parts by weight of the organic polymer (A).

### <Curing agent for epoxy resin>

When an epoxy resin is added, the curable composition can naturally contain a curing agent for curing the epoxy resin for combined use. A usable curing agent for epoxy resin is not particularly limited, and a conventionally-used curing agent for epoxy resin can be used. Specific examples thereof include primary or secondary amines such as triethylenetetramine, tetraethylenepentamine, diethylaminopropylamine, N-aminoethylpiperidine, m-xylylenediamine, m-phenylenediamine, diaminodiphenylmethane, diaminodiphenylsulfone, isophoronediamine, and amine terminal polyether; tertiary amines such as 2,4,6-tris(dimethylaminomethyl)phenol and tripropylamine, and salts of those tertiary amines; polyamide resins; imidazoles; dicyanodiamides; boron trifluoride complex compounds, carboxylic anhydrides such as phthalic anhydride, hexahydrophthalic anhydride, tetrahydrophthalic anhydride, dodecinyl succinic anhydride, pyrromellitic anhydride, and chlorenic anhydride; alcohols; phenols; carboxylic acids; and compounds such as diketone complex compound of aluminum or zirconium. The curing agent for epoxy resin is not limited to them. Further, the curing agent for epoxy resin may be used either singly, or two or more kinds thereof may be used in combination.

When a curing agent for epoxy resin is used, the amount thereof to be used is within a range of 0.1 to 300 parts by weight relative to 100 parts by weight of the epoxy resin.

As a curing agent of an epoxy resin, ketimine can be used. Ketimine is stably present in a state free of moisture, and decomposed into primary amine and ketone by moisture, and the resulting primary amine is a room temperature-curable curing agent for the epoxy resin. Use of ketimine enables obtainment of a one-liquid type composition. Such ketimine can be obtained by the condensation reaction of an amidine compound and a carbonyl compound.

For the synthesis of ketimine, known amidine and carbonyl compounds can be preferably used. For example, as amidine compound, diamines such as ethylenediamine, propylenediamine, trimethylenediamine, tetramethylenediamine, 1,3-diaminobutane, 2,3-diaminobutane, pentamethylenediamine, 2,4-diaminopentane, hexamethylenediamine, p-phenylenediamine, p,p'-biphenylenediamine and the like; polyvalent amines such as 1,2,3-triaminopropane, triaminobenzene, tris(2-aminoethyl)amine, tetra(aminomethyl)methane and the like; polyalkylenepolyamines such as diethylenetriamine, triethylenetriamine, tetraethylenepentamine and the like; polyoxyalkylene-based polyamine; aminosilanes such as γ-aminopropyltriethoxysilane, N-(β-aminoethyl)-γ-aminopropyltrimethoxysilane, N-(β-aminoethyl)-γ-aminopropylmethyldimethoxysilane and the like; and the like can be used. As the carbonyl compound, aldehydes such as acetaldehyde, propionaldehyde, n-butylaldehyde, isobutylaldehyde, diethylacetoaldehyde, glyoxal, benzaldehyde and the like; cyclic ketones such as cyclopentanone, trimethylcyclopentanone, cyclohexanone, trimethylcyclohexanone and the like; aliphatic ketones such as acetone, methyl ethyl ketone, methyl propyl ketone, methyl isopropyl ketone, methyl isobutyl ketone, diethyl ketone, dipropyl ketone, diisopropyl ketone, dibutyl ketone, diisobutyl ketone and the like; β-dicarbonyl compounds such as acetylacetone, methyl acetoacetate, ethyl acetoacetate, dimethyl malonate, diethyl malonate, methyl ethyl malonate, dibenzoylmethane and the like; and the like can be used.

### <Flame-retardant>

The curable composition may be added with a flame-retardant including a phosphorus flame-retardant such as ammonium polyphosphate and tricresyl phosphate, aluminum hydroxide, magnesium hydroxide, thermally expandable graphite and the like. The above-mentioned flame-retardant may be used either singly, or two or more kinds thereof may be used in combination.

A flame-retardant is used in a range of from 5 to 400 parts by mass, and preferably 50 to 200 parts by mass relative to 100 parts by weight of the organic polymer (A).

### <Various additives>

The curable composition may be added with various additives as necessary to control various physical properties of a curable composition or a cured product. Examples of such additives include a radical inhibitor, a metal deactivator, an antiozonant, a phosphorus peroxide decomposer, a lubricant, a pigment, a foaming agent, a solvent, a fungicide, and the like. These various additives may be used either singly, or two or more kinds thereof may be used in combination. Specific examples of the additives other than those recited in this specification are described in each publication of JP 4-69659 B, JP 7-108928 B, JP 63-254149 A, JP 64-22904 A, JP 2001-72854 A and the like.

### <<Method for producing curable composition>>

The curable composition can also be prepared as a one-component type to be cured by moisture in the air after application by previously blending all components to be blended, and preserving the same after tight sealing. In addition, the curable composition can also be prepared as a two-component type to be used by mixing a blending material with a polymer composition before use in which components such as a separate curing catalyst as a curing agent, a filler, a plasticizer, and water are blended in advance.

When the curable composition is a one-component type, all components to be blended are blended in advance, and therefore components containing moisture to be blended are preferably dehydrated and dried before use, or dehydrated under reduced pressure or the like during blending by kneading. When the curable composition is a two-component type, a curing catalyst does not need to be added to a main agent containing a polymer having a reactive silicon group, and therefore, even when the blended agent contains some moisture, there is little chance of having gellation. However, when storage stability over a long period of time is necessary, it is preferable to have dehydration and drying. As for the dehydrating and drying method, in the case of a solid such as powder, a heating drying method is preferable, and in the case of a liquid, a reduced pressure dehydrating method, or a dehydrating method using synthetic zeolite, activated alumina, silica gel, and the like is preferable. In addition, it is also possible to perform dehydration by adding a small amount of an isocyanate compound to allow a reaction of the isocyanate group and water. The storage stability is further enhanced by adding lower alcohol such as methanol and ethanol; alkoxysilane compounds such as n-propyltrimethoxysilane, vinyltrimethoxysilane, vinylmethyldimethoxysilane, γ-mercaptopropylmethyldimethoxysilane, γ-mercaptopropylmethyldiethoxysilane, and γ-glycidoxypropyltrimethoxysilane, in addition to the dehydrating and drying method.

The use amount of a dehydrating agent, particularly silicon compounds capable of reacting with water such as vinyltrimethoxysilane, is preferably 0.1 to 20 parts by weight, and particularly preferably 0.5 to 10 parts by weight relative to 100 parts by weight of the organic polymer (A).

The production method of the curable composition is not particularly limited, and, for example, it is possible to have a conventional method including blending the above-mentioned components, kneading the mixture using a mixer, a roll, a kneader and the like at ambient temperature or under heating, or a method including dissolving the above-mentioned components in a small amount of a solvent followed by mixing.

### <<Use of curable composition>>

The curable composition can be used as a cohesive, a sealing material for structures, boats and ships, automobiles, roads and the like, adhesive, molding agent, vibration insulating material, vibration damper, acoustic insulating material, foaming material, paint, spraying material, waterproofing agent for a coating film, and the like. Since a cured product obtained by curing the curable composition has favorable water-resistant adhesiveness, the curable composition is preferably used as a sealing material or an adhesive among the above, and more preferably used as an adhesive for woodworking. In addition, the curable composition can be used for various uses including electric or electronic component materials such as solar battery rear surface sealant, electrical insulating materials such as insulation covering material for electric wire or cable, elastic adhesive, contact-type adhesive, spray-type sealing material, crack repairing material, tiling adhesive, powder coating, casting material, medical rubber material, medical cohesive, medical equipment sealant, food packaging material, joint sealing material for jacket material such as sizing board, coating material, primer, conductive material for shielding electromagnetic wave, thermally conductive material, hot melt material, electric/electronic potting agent, film, gasket, various molding material, as well as rustproof or waterproof sealing material for wire glass or laminate glass end surface (cut section), liquid sealant used for automobile parts, electric parts, various machine components and the like. Moreover, since the curable composition can be closely adhered to a wide range of substrates such as glass, porcelain, wood, metal, and resin molded products by the curable composition alone or with an aid of a primer, the curable composition can also be used as various types of tight-sealing composition and adhesive composition. Furthermore, the curable composition can be used as adhesive for interior panels, adhesive for exterior panels, tiling adhesive, stone finishing adhesive, ceiling finishing adhesive, floor finishing adhesive, wall finishing adhesive, vehicle paneling adhesive, electric or electronic or precision equipment assembly adhesive, sealing material for direct glazing, multi-layer glass sealing material, SSG method sealing material, or structure working joint sealing material.

### <<Adhered structure>>

As described in the above, the curable composition is preferably used as an adhesive for adhering various materials, and it is particularly preferably used as an adhesive for adhering wood. After applying (coating) the curable composition as an adhesive on at least one adhesion surface of at least two adherends, two or more adherends are adhered to each other and the curable composition is cured such that an adhered structure composed of two or more adherends and a cured product of the curable composition is formed. An adhesion layer is composed of a cured product of the curable composition, and it is formed between two or more adherends such that it is in contact with the two or more adherends, thus yielding adhesion of the two or more adherends to each other. As described above, the curable composition is suitably used for adhering wood. Accordingly, the adhered structure is preferably an adhered structure having an adhesion layer and wood,
in which the adhesion layer is made of a cured product of the curable composition,
and the adhesion layer is present between the adherend and wood and also in contact with an adherend and wood. The material of the adherend to be adhered with wood is not particularly limited, and it can be either wood, concrete, mortar, plastic, glass, porcelain, or metal.

### EXAMPLES

The present invention is explained in greater detail in the followings by referring to specific Examples, but the present invention is not limited to the following Examples.

### (Synthesis Example 1)

Using polyoxypropylene diol having a number average molecular weight of 2,000 as an initiator, propylene oxide was polymerized by a zinc hexacyanocobaltate glyme complex catalyst to obtain polyoxypropylene diol (P-1) having a number average molecular weight of 28,500 (polystyrene-converted value obtained by GPC). After that, sodium methoxide (1.0 molar equivalent) was added as 28% methanol solution. After distillation of the methanol by vacuum evaporation, ally glycidyl ether (1.0 molar equivalent relative to the hydroxyl group of the polymer (P-1)) was added and the reaction was allowed to occur for 2 hours at 130°C. A methanol solution of 0.28 molar equivalent of sodium methoxide was added, methanol was removed, and ally chloride (1.79 molar equivalents) was additionally added to convert the terminal hydroxyl group to an allyl group. The obtained unpurified allyl group-terminal polyoxypropylene (100 parts by weight) was mixed and stirred with n-hexane (300 parts by weight) and water (300 parts by weight). Thereafter, water was removed by centrifuge. The obtained hexane solution was further mixed with 300 parts by weight of water followed by stirring. After removing water again by centrifuge, hexane was removed by evaporation under reduced pressure. According to the above, polyoxypropylene (Q-1) having a terminal structure in which more than one carbon-carbon unsaturated bonds are contained was obtained. Next, the obtained ally group-terminal polyoxypropylene (500 g) was added with platinum divinyldisiloxane complex (50 µl), and, under stirring, trimethoxysilane (TMS) (10.5 g) was slowly added dropwise thereto. The mixed solution was reacted at 90°C for 2 hours, and unreacted TMS was removed by distillation under reduced pressure to obtain reactive silicon group-containing polyoxypropylene polymer (A-1) containing a trimethoxysilyl group on the terminal and 3.4 silicon groups on average per 1 molecule.

### (Synthesis Example 2)

Isobutanol (51.1 parts by weight) was placed in a four-neck flask provided with a stirrer, and the temperature was raised to 105°C under a nitrogen atmosphere. A mixture solution of methyl methacrylate (65.0 parts by weight), 2-ethylhexyl acrylate (25.0 parts by weight), 3-methacryloxypropyltrimethoxysilane (10.0 parts by weight), 3-mercaptopropyltrimethoxysilane (8.0 parts by weight), and 2,2'-azobis(2-methylbutyronitrile) (2.5 parts by weight) dissolved in isobutanol (22.7 parts by weight) was added dropwise thereto over 5 hours. Polymerization was carried out at 105°C for 2 hours to obtain an isobutanol solution (solid content 60%) of reactive silicon group-containing (meth)acrylic acid ester-based polymer (A-2) having 1.6 silicon groups on average per 1 molecule and a number average molecular weight of 2,100.

### (Synthesis Example 3)

The reactive silicon group-containing polyoxypropylene polymer (A-1) (60.0 parts by weight) obtained in Synthesis Example 1 and an isobutanol solution (66.7 parts by weight) of the reactive silicon group-containing (meth)acrylic acid ester-based polymer (A-2) obtained in Synthesis Example 2 were mixed, and isobutanol was removed by distillation under reduced pressure to obtain organic polymer (A-3) containing reactive silicon groups, which has a polymer weight ratio (A-1)/(A-2) = 60/40.

### (Example 1, Comparative Examples 1, 2)

**[Table 1]**

| | | Ex. 1 | Comp. Ex. 1 | Comp. Ex. 2 |
|---|---|---|---|---|
| Polymer | Organic polymer A-3 | 100 | 100 | 100 |
| Binding product of kaolinite and quartz (calcined) | Aktifit VM | 100 | 100 | 100 |
| Dehydrating agent | A-171 | 6.7 | 6.7 | 6.7 |
| Curing catalyst | S-1 | 0.3 | 0.3 | 0.3 |
| Amidine compound | DBU | 0.5 | 0.5 | 0.5 |
| Epoxysilane | A-187 | 4 | 4 | 4 |
| Aminosilane | A-1120 | 1.5 | 1.5 | 1.5 |
| Aminosilane | Dynasilane 1146 | 8 | 8 | 8 |
| Cyclic N-hydroamide compound | 2-Pyrrolidinone | 5 | 0 | 0 |
| Cyclic N-methylamide compound | N-methyl pyrrolidinone | 0 | 0 | 5 |
| Initial lap-shear test (MPa) | | A | A | A |
| 23°C water resistant adhesion test (MPa) | | A+ | B | A |

A curable composition was obtained by using the obtained organic polymer (A-3) containing reactive silicon groups, weighing and preparing each component described in Table 1 in a blending amount shown in the same table, and carrying out mixing and stirring with 2300 revolutions using a revolution-rotation stirrer (trade name: SPEED MIXER DAC400FVZ). By using the curable composition obtained as above, the shear strength evaluation was carried out as follows.

### (Initial lap-shear test)

Beech wood (3 mm x 25 mm x 100 mm) was used as an adherend and, as a preliminary treatment, the surface was smoothened with P100 sandpaper. By using cellophane tape (No. 405) manufactured by Nichiban Co., Ltd. as a thickness adjusting spacer, the curable composition was applied to the beech wood to have a thickness of 50 µm over the area of 25 mm x 10 mm. Immediately after the application, the application surface of two pieces of the beech wood was fixed with an adhesion clip (manufactured by KOKUYO Co., Ltd., width 20 mm). Thereafter, aging was carried out under the conditions of 23°C and 50% RH for 1 week. After that, a tensile test was performed by an autograph AR-5422 that is manufactured by SHIMADZU CORPORATION. The test speed was set at 50 mm/min.

### (23°C Water resistant adhesion test)

Water (about 20 L) was added in a container (about 50 cm x 40 cm x height 40 cm), and the test specimen prepared as described above was immersed in water at 23°C while it is still fixed with the clip. Four days later, it was recovered from the container and a tensile test was immediately performed. The test speed was set at 50 mm/min.

Result of the each test is described in Table 1. In addition, with regard to the initial lap-shear test in each table, when the obtained strength is 10 MPa or higher, it is marked as A while the strength at break lower than that is marked as B. Furthermore, with regard to the 23°C water resistant adhesion test and boiling adhesion test, when the obtained strength is 6 MPa or more, it is marked as A+. When the obtained strength is 4 MPa or more and less than 6 MPa, it is marked as A. When the obtained strength is 3 MPa or more and less than 4 MPa, it is marked as B. When the obtained strength is 2 MPa or more and less than 3 MPa, it is marked as C. When the obtained strength is 2 MPa or less, it is marked as D.

It was able to confirm that, by using 2-pyrrolidinone as a cyclic N-hydroamide compound, the adhesion strength is significantly enhanced compared to the case of N-methylpyrrolidinone, which is a cyclic N-methylamide compound shown below, in any test of the 23°C water resistant adhesion test and boiling water resistance test.

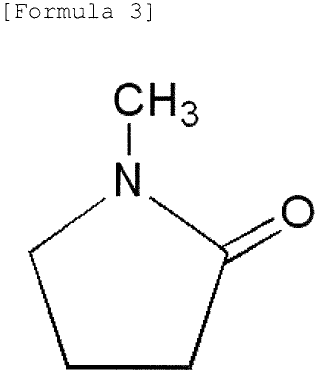

### (Example 2, Comparative Example 3)

**[Table 2]**

| | | Ex. 2 | Comp. Ex. 3 |
|---|---|---|---|
| Polymer | Organic polymer A-3 | 100 | 100 |
| Binding product of kaolinite and quartz (calcined) | Aktifit VM | 100 | 100 |
| Dehydrating agent | A-171 | 6.7 | 6.7 |
| Curing catalyst | S-1 | 0.3 | 0.3 |
| Amidine compound | DBU | 0.3 | 0.3 |
| Epoxysilane | A-181 | 4 | 4 |
| Aminosilane | Dynasilane 1146 | 8 | 8 |
| Cyclic N-hydroamide compound | 2-Pyrrolidinone | 3 | 0 |
| Non-cyclic amide compound | γ-Aminobutyric acid | 0 | 3 |
| Initial lap-shear test (MPa) | | A | A |
| 23°C water resistant adhesion test (MPa) | | A+ | A |
| Boiling adhesion test (MPa) | | A+ | B |

Evaluation was carried out according to the same method as Table 1. The boiling adhesion test measurement was made as follows.

### (Boiling adhesion test)

Water (about 20 L) was added in a container (about 50 x 40 x height 40 cm), and the test specimen prepared according to the method described in the section of Initial shear strength was immersed in water at room temperature while it is still fixed with the clip. After that, water was heated by using an IH heater followed by boiling for 6 hours. By flowing water, it was cooled to room temperature and allowed to stand for 2 hours at 23°C. Thereafter, a tensile test was carried out. The test speed was set at 50 mm/min.

It was recognized that, when γ aminobutyric acid as a compound resulting from ring opening of 2-pyrrolidinone is used, favorable water-resistant adhesiveness is not exhibited.

### (Examples 3, 4 Comparative Examples 4, 5)

**[Table 3]**

| | | Ex. 3 | Comp. Ex. 4 | Ex. 4 | Comp. Ex. 5 |
|---|---|---|---|---|---|
| Polymer | Organic polymer A-3 | 100 | 100 | 100 | 100 |
| Calcium carbonate | Carbital C110S | 100 | 100 | | |
| Kaolin | DORKAFILL 602 | | | 100 | 100 |
| Dehydrating agent | A-171 | 6.7 | 6.7 | 6.7 | 6.7 |
| Curing catalyst | S-1 | 0.3 | 0.3 | 0.3 | 0.3 |
| Amidine compound | DBU | 0.3 | 0.3 | 0.3 | 0.3 |
| Epoxysilane | A-187 | 4 | 4 | 4 | 4 |
| Aminosilane | Dynasilane 1146 | 8 | 8 | 8 | 8 |
| Cyclic N-hydroamide compound | 2-Pyrrolidinone | 3 | 0 | 3 | 0 |
| Initial lap-shear test (MPa) | | B | B | A | A |
| 23°C water resistant adhesion test (MPa) | | B | C | A | B |
| Boiling adhesion test (MPa) | | B | C | A | C |

According to the same method as Tables 1 and 2, evaluation was carried out with regard to the influence exhibited by the filler. By using a cyclic N-hydroamide compound, a curable composition having favorable initial strength and water-resistant adhesiveness can be obtained even when a universally used filler like calcium carbonate and kaolinite is used. When kaolinite is used, a curable composition with low viscosity was yielded, which is suitable for a use in which low viscosity is required.

Furthermore, each blended agent in Tables 1 to 3 is as described below.
Aktifit VM: vinylsilane-treated calcined Sillitin manufactured by HOFFMANN MINERAL GmbH
A-171: vinyltrimethoxysilane manufactured by Momentive
S-1: dioctyl tin compound manufactured by Nitto Kasei Co., Ltd.
A-187: γ-glycidoxypropyltrimethoxysilane manufactured by Momentive
DBU: 1,8-diazabicyclo[5.4.0]undec-7-ene manufactured by Tokyo Chemical Industry Co., Ltd.
A-1120: N-β-i-aminoethyl-γ-aminopropyltrimethoxysilane manufactured by Momentive
Dynasilane1146: diaminosilane manufactured by Evonik Industries AG
2-Pyrrolidinone: manufactured by Sigma-Aldrich
N-Methyl pyrrolidinone: manufactured by Sigma-Aldrich
γ-Aminobutyric acid: manufactured by Sigma-Aldrich
Carbital C110S: surface-treated ground calcium carbonate manufactured Imerys
DORKAFILL 602: surface-treated kaolinite manufactured by Dorfner

## Claims

1. A curable composition comprising an organic polymer (A) having a reactive silicon group and a cyclic N-hydroamide compound (B),
wherein the cyclic N-hydroamide compound (B) is 2-pyrrolidinone shown below 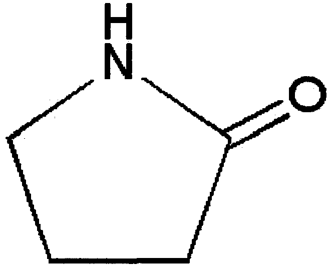 wherein a main chain of the organic polymer (A) is a polyoxyalkylene-based polymer (A1), a (meth)acrylic acid ester-based polymer (A2) or a polyoxyalkylene-based polymer (A1) and a (meth)acrylic acid ester-based polymer (A2) in combination, and wherein the blending amount of the cyclic N-hydroamide compound (B) is, relative to 100 parts by weight of the organic polymer (A), 1 to 5 parts by weight.

2. The curable composition according to claim 1, wherein the polyoxyalkylene-based polymer (A1) is an polyoxyalkylene-based polymer which has two or more reactive silicon groups at one terminal site.

3. An adhesive composition comprising the curable composition according to claim 1 or 2.

4. A cured product obtainable by curing the curable composition according to claim 1 or 2.

5. An adhered structure comprising an adherend, an adhesion layer, and wood,
wherein the adhesion layer is composed of the cured product according to claim 4, and the adhesion layer is present between the adherend and wood and also in contact with the adherend and wood.

## Patentansprüche

1. Eine härtbare Zusammensetzung, umfassend ein organisches Polymer (A) mit einer reaktiven Siliciumgruppe und eine cyclische N-Hydroamidverbindung (B),
wobei die cyclische N-Hydroamidverbindung (B) 2-Pyrrolidinon ist, wie unten dargestellt 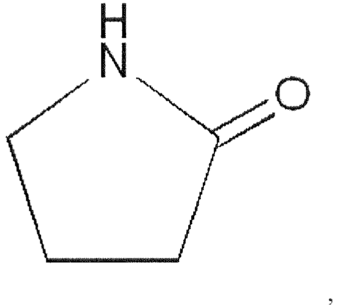 wobei eine Hauptkette des organischen Polymers (A) ein Polymer auf Polyoxyalkylenbasis (A1), ein Polymer auf (Meth)acrylsäureesterbasis (A2) oder ein Polymer auf Polyoxyalkylenbasis (A1) und ein Polymer auf (Meth)acrylsäureesterbasis (A2) in Kombination ist, und wobei die Mischmenge der cyclischen N-Hydroamidverbindung (B), bezogen auf 100 Gewichtsteile des organischen Polymers (A), 1 bis 5 Gewichtsteile beträgt.

2. Die härtbare Zusammensetzung gemäß Anspruch 1, wobei das Polymer auf Polyoxyalkylenbasis (A1) ein Polymer auf Polyoxyalkylenbasis ist, das zwei oder mehr reaktive Siliciumgruppen an einer Endstelle aufweist.

3. Eine Klebstoffzusammensetzung, umfassend die härtbare Zusammensetzung gemäß Anspruch 1 oder 2.

4. Ein gehärtetes Produkt, erhältlich durch Härten der härtbaren Zusammensetzung gemäß Anspruch 1 oder 2.

5. Eine geklebte Struktur, die einen Adhärenden, eine Haftschicht und Holz umfasst, wobei die Haftschicht aus dem gehärteten Produkt gemäß Anspruch 4 besteht, und die Haftschicht zwischen dem Adhärenden und dem Holz vorliegt und auch in Kontakt mit dem Adhärenden und dem Holz ist.

## Revendications

1. Composition durcissable comprenant un polymère organique (A) ayant un groupe silicium réactif et un composé N-hydroamide cyclique (B),
dans laquelle le composé N-hydroamide cyclique (B) est la 2-pyrrolidinone présentée ci-dessous 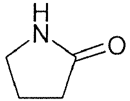 dans laquelle une chaîne principale du polymère organique (A) est un polymère à base de polyoxyalkylène (A1), un polymère à base d'ester d'acide (méth)acrylique (A2) ou un polymère à base de polyoxyalkylène (A1) et un polymère à base d'ester d'acide (méth)acrylique (A2) en combinaison, et dans laquelle la quantité de mélange du composé N-hydroamide cyclique (B), pour 100 parties en poids du polymère organique (A), est de 1 à 5 parties en poids.

2. Composition durcissable selon la revendication 1, dans laquelle le polymère à base de polyoxyalkylène (A1) est un polymère à base de polyoxyalkylène qui a deux ou plus de deux groupes silicium réactifs au niveau d'un seul site terminal.

3. Composition adhésive comprenant la composition durcissable selon la revendication 1 ou 2.

4. Produit durci pouvant être obtenu par durcissement de la composition durcissable selon la revendication 1 ou 2.

5. Structure collée comprenant une partie à coller, une couche d'adhésion, et du bois, dans laquelle la couche d'adhésion est composée du produit durci selon la revendication 4, et la couche d'adhésion est présente entre la partie à coller et le bois et aussi est en contact avec la partie à coller et le bois.
